# DEMANDE DE BREVET EUROPEEN

(11) **EP 4 560 936 A1**
(43) Date de publication de la demande: **28.05.2025**
(21) Numéro de dépôt: 24214900.3
(22) Date de dépôt: 22.11.2024
(51) Int. Cl.: H04B 10/116

(54) **PROCÉDÉ ET DISPOSITIF DE CALIBRATION DE LA DÉMODULATION DE DONNÉES MODULÉES PAR MODULATION D AMPLITUDE D'UN SIGNAL LUMINEUX ÉMIS PAR UNE SOURCE LUMINEUSE**

(30) Priorité: 24.11.2023 FR 2312981
(71) Demandeur: SCHNEIDER ELECTRIC INDUSTRIES SAS, 92500 Rueil-Malmaison (FR)
(72) Inventeur: JIANG, Lei, 38400 SAINT MARTIN D'HERES (FR); HERMITTE, Fabien, 38240 MEYLAN (FR); DREINA, Emmanuel, 38240 MEYLAN (FR); LOVATO, Jean-Louis, 38330 BIVIERS (FR)
(74) Mandataire: Lavoix

(57) **Abrégé**

La présente invention concerne un procédé et un dispositif de calibration de la démodulation de données modulées par modulation d'amplitude d'un signal lumineux émis par une source lumineuse. Le dispositif comporte un appareil (20) de capture d'images numériques ayant des paramètres de sensibilité et de durée d'exposition associés, et un dispositif électronique de calcul (23) mettant en oeuvre des modules de :
- ajustement automatique (24) des paramètres de sensibilité et de durée d'exposition,
- acquisition (26) d'une image numérique par ledit appareil de capture d'images numériques,
- extraction (28) d'une série d'échantillons de l'image numérique acquise, chaque échantillon extrait prenant une valeur parmi deux valeurs prédéterminées,
- calcul (30) d'une pluralité de facteurs d'échantillonnage à partir de ladite série d'échantillons, chaque facteur d'échantillonnage étant associé à un motif prédéterminé et étant indicatif d'un nombre d'échantillons de même valeur représentatifs dudit motif, et mémorisation des facteurs d'échantillonnage calculés.

## Description

La présente invention concerne un procédé de calibration de la démodulation de données modulées par modulation d'amplitude d'un signal lumineux émis par une source lumineuse.

Elle concerne également un dispositif de calibration de la démodulation associé.

L'invention se situe dans le domaine de la technologie de communication sans fil utilisant la lumière visible, utilisant un système VLC (pour « Visible Light Communication »).

Elle s'applique en particulier dans le cadre de la communication de données en utilisant un codeur/émetteur mis en oeuvre sur des produits industriels comportant en façade un indicateur lumineux à diode électroluminescente (LED), e.g. un écran ou un ou plusieurs voyants lumineux, destiné(s) à fournir des indications sur un état du produit, les données étant décodables par un récepteur/décodeur VLC, intégré par exemple dans un dispositif portable, par exemple un téléphone portable.

Par exemple, l'invention s'applique pour des produits de surveillance et de protection de systèmes électriques, mais s'applique plus généralement avec tout type de produit comportant un indicateur lumineux à LED en façade.

L'utilisation de la technologie de communication sans fil au moyen de la lumière visible (VLC), s'est développée récemment et a trouvé de nombreuses applications.

Un système de communication par lumière visible VLC comporte un dispositif codeur/émetteur et un dispositif récepteur/décodeur, positionnés sensiblement en vis-à-vis. Le dispositif codeur/émetteur comporte une source lumineuse, par exemple une ou plusieurs lampes à diode électroluminescente ou LED (pour « Light-Emitting Diode », et le dispositif récepteur/décodeur comporte un appareil de capture d'images, e.g. une caméra CMOS.

La source lumineuse émet un signal lumineux qui est modulé en amplitude en fonction de données à transmettre, les données étant codées en symboles par un procédé de codage, chaque symbole étant représentatif d'un bit à moduler. Les symboles sont ensuite encapsulés dans des paquets de transmission formatés, pour former un train binaire comportant un mot de synchronisation (ou séquence de synchronisation) prédéterminé, suivi d'un paquet de transmission formaté comportant un en-tête, des données utiles et un code détecteur d'erreur. Ce train binaire est transformé en signal électrique qui commande une activation ou désactivation de la source lumineuse, à une fréquence choisie de manière à ce que le scintillement provoqué soit imperceptible pour l'oeil humain. Par exemple lorsque la source lumineuse est allumée (état haut du signal lumineux correspondant), un '1' binaire est transmis, et lorsque la source lumineuse est éteinte (état bas du signal lumineux correspondant), un '0' binaire est transmis. Une autre correspondance entre états haut et bas et bits transmis pourrait être mise en place, sans changer le principe de la méthode.

Le dispositif récepteur/décodeur applique un traitement d'images numériques sur les images acquises par l'appareil de capture d'images pour effectuer une démodulation des données modulées, puis un décodage pour obtenir des données décodées.

Les images numériques acquises comportent des matrices de pixels dont les valeurs, dans au moins une zone de l'image éclairée par la source, sont représentatives de l'état haut ou bas de la source lumineuse, ou d'une transition entre ces états. Ainsi, une image numérique acquise comporte une zone comportant des franges claires et sombres, correspondant respectivement aux états haut et bas du signal lumineux. La performance de la démodulation dépend en particulier des paramètres de fonctionnement de l'appareil de capture d'images CMOS utilisé, notamment de la sensibilité et de la durée d'exposition. La sensibilité, exprimée en ISO ou en dB (gain), définit la sensibilité des capteurs. La durée d'exposition, définit la durée « d'ouverture » des capteurs, et par conséquent représente le temps pendant lequel chaque colonne de la matrice d'une image numérique est exposé à la lumière.

De plus, les capteurs CMOS mettent en oeuvre un mécanisme de « Rolling Shutter » qui permet de former des colonnes de l'image numérique acquise, et de former des franges verticales claires lorsque la source lumineuse est allumée (état haut du signal lumineux correspondant), et des franges verticales sombres lorsque la source lumineuse est éteinte (état bas du signal lumineux correspondant).

La performance de démodulation dépend en outre d'un facteur d'échantillonnage indiquant le rapport entre les franges claires ou sombres d'une image acquise et le nombre de bits correspondants. Le ou les facteurs d'échantillonnage dépendent notamment de la durée d'acquisition d'une image numérique, et d'une durée d'acquisition des valeurs des pixels, et donc varient en fonction des modèles d'appareil de capture d'images.

Dans les applications envisagées, il est intéressant d'utiliser des appareils électroniques existants avec au moins un appareil de capture d'images CMOS intégré, tels que des téléphones mobiles dits intelligents (« smartphones »), tablettes électroniques, ordinateurs portables.

Cependant il existe de nombreux modèles de tels appareils électroniques, intégrant des appareils de capture d'images ayant des spécificités de fonctionnement.

Il n'est pas pratique d'envisager une calibration manuelle de chaque modèle d'appareil de capture d'images intégré dans les divers modèles d'appareils électroniques portables.

L'invention a pour but de remédier à cet inconvénient, en proposant un procédé de calibration de la démodulation amélioré intégrant une calibration automatique et un calcul automatique d'une pluralité de facteurs d'échantillonnage à partir des images numériques acquises.

A cet effet, l'invention propose un procédé de calibration de la démodulation de données modulées par modulation d'amplitude d'un signal lumineux émis par une source lumineuse d'un dispositif codeur, les données modulées étant encapsulées dans des paquets de transmission formatés, le procédé étant mis en oeuvre par un dispositif de calibration de la démodulation comportant un appareil de capture d'images numériques ayant des paramètres de sensibilité et de durée d'exposition associés, et un dispositif électronique de calcul configuré pour recevoir des images numériques acquises par ledit appareil de capture. Ce procédé comporte des étapes de:
- A) ajustement automatique des paramètres de sensibilité et de durée d'exposition pour une mise de l'appareil de capture d'images dans un mode d'acquisition d'images adapté pour un décodage de données transmises par communication par lumière visible,
- B) acquisition d'une image numérique par ledit appareil de capture d'images numériques, une image numérique acquise comportant une zone comportant des franges claires et sombres, correspondant respectivement aux états haut et bas du signal lumineux reçu,
- C) extraction d'une série d'échantillons de l'image numérique acquise, chaque échantillon extrait prenant une valeur parmi deux valeurs prédéterminées,
- D) calcul d'une pluralité de facteurs d'échantillonnage à partir de ladite série d'échantillons, chaque facteur d'échantillonnage étant associé à un motif prédéterminé et étant indicatif d'un nombre d'échantillons de même valeur représentatifs dudit motif, et mémorisation, pour chaque motif prédéterminé, du facteur d'échantillonnage calculé associé audit motif.

Avantageusement, le procédé proposé permet une mise au point des paramètres de sensibilité et de durée d'exposition et un calcul d'une pluralité de facteurs d'échantillonnage, sans connaissance préalable du modèle d'appareil de capture d'images utilisé.

Ainsi, avantageusement, cela permet d'intégrer le procédé de calibration de la démodulation proposé dans tout appareil électronique portable, notamment de type smartphone ou tablette électronique, et donc de mettre en oeuvre des applications utilisant la lecture de données transmises par le système de communication VLC.

Le procédé calibration de la démodulation de données modulées par modulation d'amplitude d'un signal lumineux selon l'invention peut présenter une ou plusieurs des caractéristiques ci-dessous, prises indépendamment ou selon toutes les combinaisons acceptables.

Le procédé comporte en outre une étape d'application des facteurs d'échantillonnage calculés pour récupérer au moins un paquet de données transmises.

Il comporte, après récupération d'au moins un paquet de données transmises, une validation desdites données par application d'un code détecter d'erreur.

Le procédé comporte l'application des étapes B) à D) sur un nombre prédéterminé P d'images numériques acquises, afin d'obtenir, une pluralité de facteurs d'échantillonnage par image numérique acquise, et un calcul d'un facteur d'échantillonnage moyen par motif, égal à la valeur moyenne des facteurs d'échantillonnage associés audit motif pour chaque image numérique acquise.

Il comporte en outre une application des facteurs d'échantillonnage moyens pour une récupération de données transmises, pour une pluralité d'images numériques, d'au moins un paquet de données transmises par image numérique, une validation des données récupérées par application d'un code détecteur d'erreur, et un calcul d'un indicateur de validité.

Si l'indicateur de validité est inférieur à un seuil de validité, les étapes B) à D) sont itérées sur ledit nombre prédéterminé d'images numériques acquises suivantes.

L'étape D) de calcul d'une pluralité de facteurs d'échantillonnage à partir de ladite série d'échantillons comporte pour chaque valeur d'échantillon, un décompte des nombres d'échantillons successifs prenant ladite valeur, et un arrangement des nombres décomptés par ordre décroissant dans une liste associée à ladite valeur d'échantillon.

Le procédé comporte, pour chaque liste, un filtrage pour retenir uniquement les nombres distincts ayant une occurrence supérieure ou égale à deux.

Le procédé comporte un regroupement des nombres décomptés distants d'au plus le seuil de distance prédéterminé, le regroupement comportant un remplacement, dans la liste correspondante, desdits nombres décomptés distants d'au plus le seuil de distance prédéterminé par un nombre mis à jour égal à la valeur moyenne desdits nombres décomptés distants d'au plus le seuil de distance prédéterminé.

Le procédé comporte en outre une détection de présence dans l'une desdites listes d'un nombre mis à jour correspondant à un mot de synchronisation prédéterminé.

Le procédé comporte, en cas de détection positive, un calcul desdits facteurs d'échantillonnage par multiplication de chaque nombre mis à jour par un coefficient d'incertitude prédéterminé.

La sensibilité est ajustée à 55% d'une sensibilité maximale de l'appareil de capture d'images.

Selon un autre aspect, l'invention concerne un dispositif de calibration de la démodulation de données modulées par modulation d'amplitude d'un signal lumineux émis par une source lumineuse d'un dispositif codeur, les données modulées étant encapsulées dans des paquets de transmission formatés, comportant un appareil de capture d'images numériques ayant des paramètres de sensibilité et de durée d'exposition associés, et un dispositif électronique de calcul configuré pour recevoir des images numériques acquises par ledit appareil de capture, configuré pour mettre en oeuvre un procédé tel que brièvement décrit ci-dessus.

Dans un mode de réalisation, le dispositif de calibration est un téléphone ou une tablette électronique.

D'autres caractéristiques et avantages de l'invention ressortiront de la description qui en est donnée ci-dessous, à titre indicatif et nullement limitatif, en référence aux figures annexées, parmi lesquelles :
- la figure 1 une représentation schématique d'un système de communication VLC intégrant un dispositif de calibration de la démodulation selon un mode de réalisation ;
- la figure 2 est un synoptique des principales étapes d'un procédé de calibration de la démodulation selon un mode de réalisation ;
- la figure 3 est un synoptique des étapes pour calculer une pluralité de facteurs d'échantillonnage selon un mode de réalisation ;
- la figure 4 est un exemple de série de données, listes et facteurs d'échantillonnage obtenus en sortie des étapes de la figure 3.

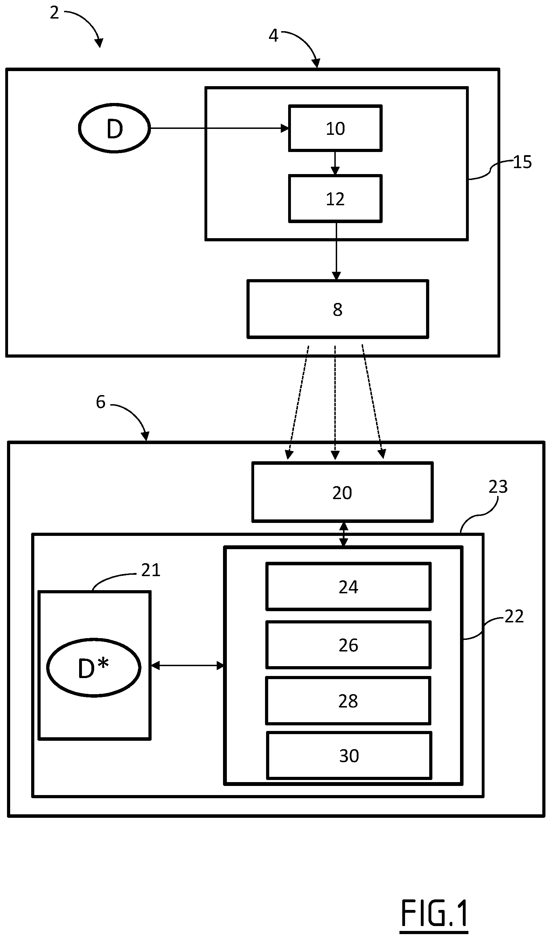

La figure 1 illustre un système 2 de communication VLC, comportant un dispositif codeur/émetteur 4 en communication unidirectionnelle avec un dispositif récepteur/décodeur 6.

Le dispositif 4, est configuré pour coder, moduler et transmettre des données numériques D en utilisant une modulation d'amplitude d'un signal lumineux émis par une source lumineuse à LED 8, par exemple formée d'une ou plusieurs lampes, adaptées pour émettre des ondes de longueur d'onde dans le spectre visible, la longueur d'onde étant comprise entre 380nm et 780 nm.

Le dispositif 4 comporte un module de codage 10 et un module de modulation 12, qui commande l'amplitude d'un signal lumineux émis par la source de lumière 8.

Le module de codage 10 met en oeuvre par exemple un codage qui consiste à transformer des bits en mots de code, également appelés symboles. Dans le système VLC 2, le module de codage 10 met en oeuvre le codage Manchester, et un formatage sous forme de paquets de transmission formatés selon un protocole choisi.

Le codage Manchester, selon la norme IEEE 802.3, consiste à coder un « 1 » par « 01 » et un « 0 » par « 10 ».

Les symboles sont ensuite encapsulés dans des paquets de transmission formatés, pour former un train binaire, i.e. un paquet comportant un mot de synchronisation prédéterminé, suivi d'une série de symboles formatée comportant un en-tête, des données utiles et un code détecteur d'erreur.

Par exemple, lorsque le codage Manchester est utilisé, le mot de synchronisation est le motif `1111' car par définition, ce motif ne fait pas partie du code Manchester. En d'autres termes, aucune série de symboles du code de Manchester ne forme une suite de quatre '1'.

La taille des paquets est variable, en fonction de l'application visée. Elle est indiquée dans l'en-tête des paquets.

Le code détecteur d'erreur est par exemple un code de contrôle de redondance cyclique (en anglais « cyclic redundancy check ») tel que CRC8 ou CRC16.

Le module de modulation 12 met en oeuvre une modulation de type « tout ou rien » ou modulation OOK (de l'anglais « On-Off Keying »). Dans ce type de modulation, le signal lumineux émis par la source lumineuse est à l'état haut (i.e. source lumineuse allumée) pour transmettre un '1' binaire ou à l'état bas (i.e. source lumineuse éteinte) pour transmettre un '0', avec une fréquence suffisamment élevée pour éviter que le scintillement soit visible par l'œil humain.

Dans un mode de réalisation, le module de codage 10 et le module de modulation 12 sont mis en oeuvre par un processeur de calcul 15.

En variante, chacun des modules de codage 10 et de modulation 12 est un module dédié réalisé sous forme d'un composant logique programmable tel qu'un FPGA (de l'anglais *Field Programmable Gate Array*), ou encore sous forme d'un circuit intégré dédié, tel qu'un ASIC (de l'anglais *Application Spécifie Integrated Circuit*).

Par exemple, le dispositif 4 est intégré dans un produit industriel et la source de lumière 8 comporte une ou plusieurs lampes LED, formant un indicateur lumineux initialement destinée à une signalisation d'un état de fonctionnement du produit industriel.

La source de lumière est de préférence intégrée de manière à éclairer une portion d'une face du produit industriel, visible par un utilisateur lorsque le produit industriel est en position de fonctionnement, par exemple lorsque le produit industriel est fixé sur un support par une de ses faces dite face arrière, la portion éclairée est située sur la face avant du produit.

Avantageusement, la modulation du signal lumineux pour transmettre des données numériques supplémentaires ne perturbe pas la fonction initiale de l'indicateur lumineux du produit industriel.

Par exemple, les données numériques D comportent une information supplémentaire relative au produit industriel, par exemple un identifiant unique du produit, une adresse IP (Internet Protocol) ou un URL (acronyme de « Uniform Resource Locator » ou adresse web), une clé ou un code, l'état des registres, un mot de passe de couplage BLE (acronyme de « Bluetooth Low Energy ») ou des clés dynamiques pour la mise en service de Zigbee. Plus généralement, les données numériques D comportent des informations de mise en service ou pairing (appairage) de communication sans fils, mesures réalisées par le produit, l'état du produit. Cela permet par exemple de faciliter l'installation et la mise en service, ou la maintenance d'un produit par un utilisateur. De plus, cela permet d'améliorer la cybersécurité d'un produit.

Le signal lumineux modulé est émis par la source lumineuse 8.

Le dispositif récepteur/décodeur 6, comporte un appareil de capture d'images 20, et un dispositif électronique de calcul 23.

Par exemple, l'appareil de capture d'images est une caméra optique à capteurs CMOS (pour « *Complementary metal-oxide-semiconductor* »), adaptée pour capter des signaux lumineux et pour les transformer en une image numérique étant composée d'une ou plusieurs matrices de pixels, chaque pixel d'une matrice de pixels ayant une valeur numérique associée.

Lorsque le dispositif 6 est placé par un utilisateur de manière à ce que l'appareil de capture d'images 20 soit placé sensiblement en vis-à-vis de la source lumineuse 8, à une distance de la source lumineuse 8 choisie par l'utilisateur et par exemple comprise entre 0cm (collé) et 2 mètres, et que l'appareil de capture 20 est mis dans un mode de réception VLC, la ou chaque image numérique acquise comprend, dans une zone éclairée par le signal lumineux émis par la source lumineuse, des franges, disposées verticalement, représentatives des états haut ou bas du signal émis, ou d'une transition entre ces états.

La performance de la démodulation des données modulées et transmises par la source lumineuse dépend en particulier des paramètres de fonctionnement de l'appareil de capture d'images utilisé, i.e. du paramètre de sensibilité, définissant la sensibilité des capteurs ; de la durée d'exposition, définissant la durée « d'ouverture » des capteurs, et des facteurs d'échantillonnage indiquant le rapport entre les franges claires ou sombres d'une image acquise et le nombre de symboles correspondants. Avantageusement, le calcul de plusieurs facteurs d'échantillonnage est proposé, comme décrit plus en détail ci-après.

L'image numérique acquise par l'appareil 20 est transmise au dispositif 23 qui effectue des opérations de calibration de la démodulation de données modules, et optionnellement, une démodulation et un décodage pour obtenir en sortie un ensemble de données numériques décodées D*.

En l'absence de perte ou d'erreur, les données numériques décodées D* sont identiques aux données numériques D.

Le dispositif 23 est un dispositif électronique de calcul qui met en oeuvre un procédé de calibration de la démodulation tel que décrit ci-après selon ses divers modes de réalisation.

Le dispositif électronique de calcul 23 comporte une unité de calcul 22, e.g. un ou plusieurs processeurs et une unité de mémoire électronique 21 associée. L'unité de mémoire électronique 21 comporte notamment des mémoires de type RAM, ROM, tout type de mémoire non-volatile (par exemple EPROM, EEPROM, FLASH, NVRAM).

L'appareil de capture d'images 20, l'unité de mémoire 21 et l'unité de calcul 22 sont adaptées pour communiquer par un bus de communication de données.

Dans un mode de réalisation, le dispositif récepteur/décodeur 6 est appareil électronique portable, tel qu'un téléphone portable ou smartphone, une tablette électronique, un ordinateur portable, ou tout autre appareil électronique portable équipé d'une caméra CMOS et d'un dispositif électronique de calcul.

Le dispositif électronique de calcul 23 est configuré pour mettre en oeuvre un module 24 d'ajustement automatique des paramètres de sensibilité et de durée d'exposition pour une mise de l'appareil de capture d'images dans un mode d'acquisition d'images adapté pour un décodage de données transmises par communication par lumière visible. Les paramètres sont mis en oeuvre par l'appareil de capture d'images 20 pour une acquisition d'images numériques, à une fréquence donnée, par exemple de 30 trames par seconde.

Une image numérique acquise est fournie au dispositif électronique de calcul par l'appareil de capture 20.Le dispositif électronique de calcul 23 met en oeuvre également :
- un module 26 d'extraction d'une série d'échantillons de l'image numérique acquise, chaque échantillon extrait prenant une valeur parmi deux valeurs prédéterminées, en pratique une série de '1' et de '0' ;
- un module 28 de calcul et de mémorisation d'une pluralité de facteurs d'échantillonnage à partir de la série d'échantillons, chaque facteur d'échantillonnage étant associé à un motif prédéterminé et étant indicatif d'un nombre d'échantillons de même valeur représentatifs du motif et
- un module 30 d'application des facteurs d'échantillonnage calculés pour démoduler et décoder au moins un paquet de données transmises.

Dans un mode de réalisation, les modules 24, 26, 28, 30 sont réalisés sous forme d'instructions logicielles formant un programme d'ordinateur, qui, lorsqu'il est exécuté par un ordinateur, met en oeuvre un procédé de calibration de la démodulation de données modulées par modulation d'amplitude d'un signal lumineux tel que décrit.

Le programme d'ordinateur comportant des instructions logicielles est en outre apte à être enregistré sur un support non transitoire lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante, chacun des modules 24, 26, 28, 30 est un module dédié réalisé sous forme d'un composant logique programmable tel qu'un FPGA (de l'anglais *Field Programmable Gate Array*), ou encore sous forme d'un circuit intégré dédié, tel qu'un ASIC (de l'anglais *Application Spécifie Integrated Circuit*).

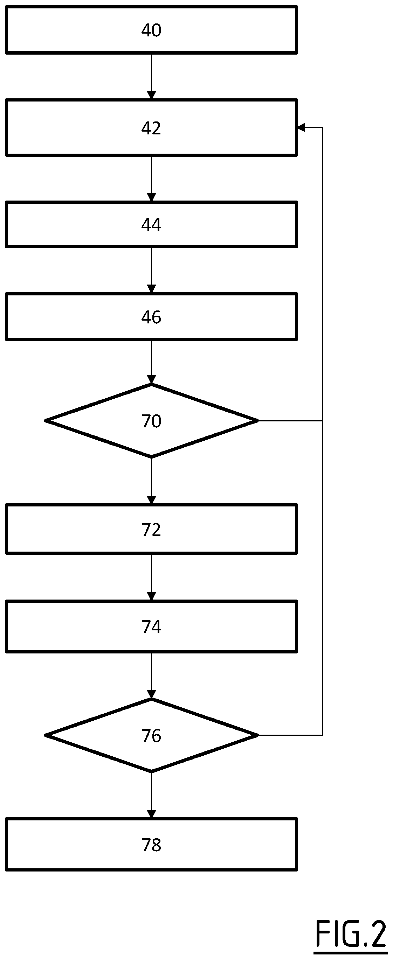

La figure 2 est un synoptique des principales étapes d'un mode de réalisation d'un procédé calibration de la démodulation de données modulées par modulation d'amplitude d'un signal lumineux émis par une source lumineuse.

Le procédé comprend une étape 40 d'ajustement automatique, également appelé calibration, des paramètres de sensibilité et de durée d'exposition pour une mise de l'appareil de capture d'images dans un mode d'acquisition d'images adapté pour un décodage de données transmises par communication par lumière visible.

En particulier, l'auto-ajustement automatique pour la prise de vue est inhibé.

De préférence, la sensibilité est fixée à un pourcentage de la sensibilité maximale Gmax de l'appareil de capture d'images, par exemple à 55% de Gmax.

De préférence, la durée d'exposition est fixée à environ 30 microsecondes. Une telle durée d'exposition est une durée courte, correspondant à une vitesse d'échantillonnage élevée, de manière favoriser la récupération des symboles transmis.

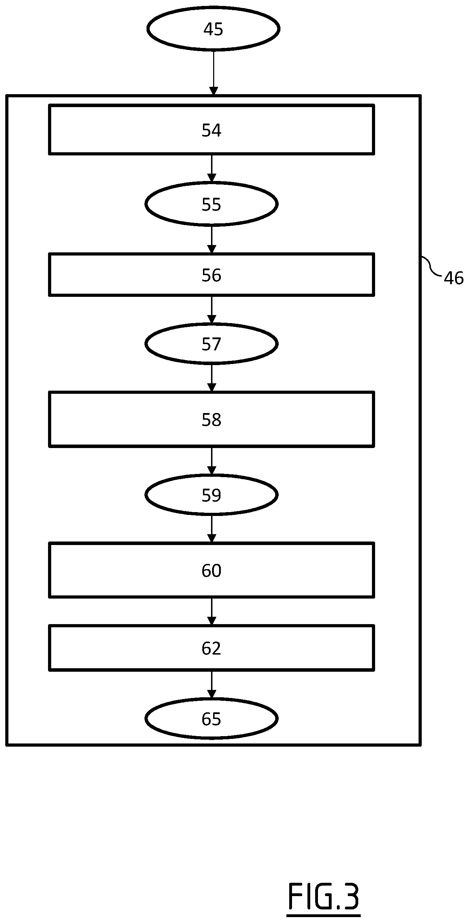

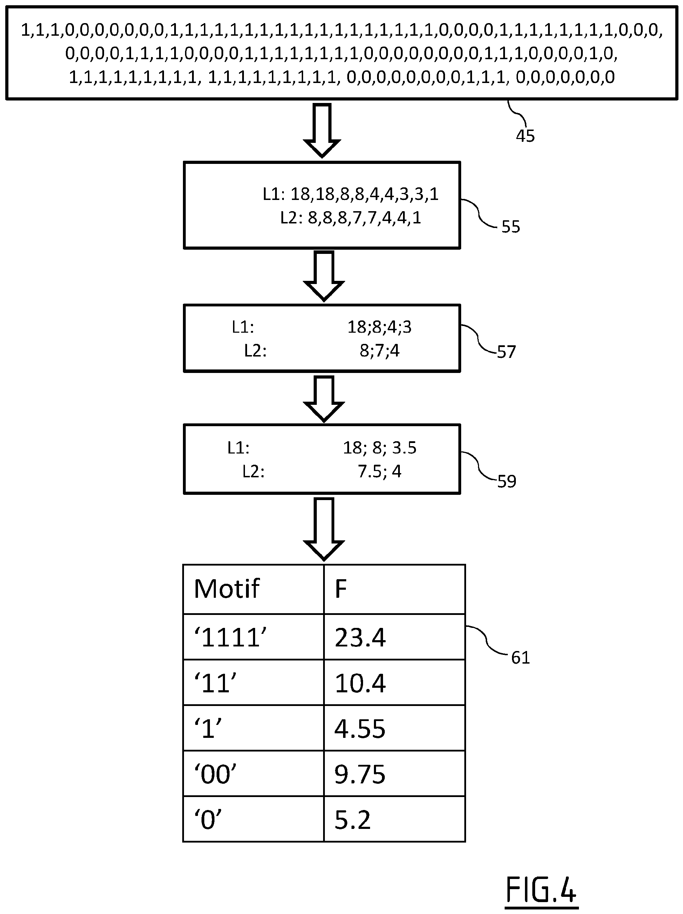

Les facteurs d'échantillonnage à appliquer sont calculés et mémorisés, comme expliqué plus en détail ci-après en référence aux figures 3 et 4.

L'étape 40 est suivie d'une étape 42 d'acquisition d'une image numérique, obtenue par l'appareil de capture d'images mettant en oeuvre les paramètres de sensibilité et de durée d'exposition fixés.

L'étape 42 est suivie d'une étape 44 d'extraction d'une série d'échantillons de l'image numérique acquise, chaque échantillon extrait prenant une valeur parmi deux valeurs prédéterminées, par exemple '1' et '0'. Par exemple, il s'agit d'une série de données binaires, extraites par application d'une courbe de seuillage, à partir de valeurs moyennes par colonne, calculées à partir de la luminance de l'image numérique acquise.

Dans un mode de réalisation, l'étape 44 met en oeuvre un calcul de valeurs moyennes par colonne de la luminance de l'image numérique acquise, un calcul d'une courbe de seuillage à partir de ces valeurs moyennes, et une application de la courbe de seuillage. Plusieurs méthodes de calcul d'une telle courbe de seuillage sont connues dans l'état de la technique, et sont applicables ici.

Une série d'échantillons prenant des valeurs de '1' ou '0' selon que la valeur moyenne de la colonne correspondante est au-dessus ou en-dessous de la valeur correspondante de la courbe de seuillage. La série d'échantillons comporte autant d'échantillons que le nombre de colonnes de l'image numérique.

Dans un mode de réalisation optimisé, l'étape 44 met en oeuvre :
- un calcul d'une valeur moyenne par colonne de la luminance de l'image numérique, et une mémorisation des valeurs moyennes par colonne en association avec un indice de colonne, rangées entre un premier indice de bord correspondant à un premier de ladite image et un deuxième indice de bord correspondant à un deuxième bord de ladite image ;
- une détermination d'une valeur maximale desdites valeurs moyennes, et calcul d'un seuil à partir de ladite valeur maximale,
- une détermination d'un premier indice de colonne correspondant à la première valeur moyenne supérieure ou égale audit seuil en partant du premier indice de bord, et d'un deuxième indice de colonne correspondant à la première valeur moyenne supérieure ou égale audit seuil en partant du deuxième indice de bord ;
- une extraction d'un sous-ensemble de valeurs moyennes entre le premier indice de colonne et le deuxième indice de colonne, et
- un calcul d'une courbe de seuillage sur les sous-ensemble de valeurs moyennes et une application de la courbe de seuillage calculée pour obtenir une série d'échantillons binaires.

Le procédé comprend ensuite une étape 46 de calcul d'une pluralité de facteurs d'échantillonnage.

Chaque facteur d'échantillonnage est associé à un motif prédéterminé et étant indicatif d'un nombre d'échantillons de même valeur (`1' ou '0') représentatifs du motif dans la série d'échantillons.

En pratique, lorsque le codage Manchester est appliqué, et que le mot de synchronisation `1111' est utilisé, les motifs à prendre en considération sont :
- M₁= '1111'
- M₂= '11'
- M₃= '1'
- M₄='00'
- M₅= '0'

En effet, les motifs correspondent à l'ensemble de regroupements de symboles de même valeur susceptible d'être validement modulés et transmis dans des paquets de transmission par le dispositif codeur et émetteur, lorsque le codage Manchester est appliqué et lorsque le mot de synchronisation est `1111'.

Un facteur d'échantillonnage Fᵢ est associé à chaque motif Mᵢ, Fᵢ étant un nombre indiquant le nombre d'échantillons de même valeur de la série d'échantillons sont utilisés pour modules le motif.

Un mode de réalisation de l'étape 46 de calcul d'une pluralité de facteurs d'échantillonnage est décrit en référence à la figure 3, alors que la figure 4 illustre un exemple de résultats intermédiaires obtenus lors de la mise en oeuvre de ce calcul.

Ainsi, partant d'une série 45 d'échantillons prenant des valeurs binaires (ou symboles), respectivement `1' ou '0', dont un exemple est fourni dans la figure 4, le procédé comprend une étape 54 de décompte des nombres d'échantillons successifs de chaque valeur, i.e. `1' ou '0', et de mémorisation de ces nombres d'échantillons, triés par ordre décroissant, dans une liste associée à la valeur. Le résultat de l'étape 54 est référencé 55.

Comme montré dans l'exemple de la figure 4, à l'issue de l'étape 54 sont obtenues respectivement : une liste L1 de nombres de `1' successifs dans la série 45, et une liste L2 de nombres de '0' successifs dans la série 45.

Le procédé comprend ensuite une étape de filtrage 56, lors de laquelle seuls sont retenus, dans chaque liste, les nombres distincts, ayant une occurrence supérieure ou égale à 2. Le résultat de l'étape 56, référencé 57, est illustré dans l'exemple de la figure 4.

Ainsi par exemple, dans la liste L1, les nombres 18, 8, 4 et 3 sont retenus, et le nombre « 1 » correspondant à une occurrence unique est éliminé.

Avantageusement, cela permet d'éliminer d'éventuelles erreurs isolées.

Le procédé comporte une étape 58 de regroupement comportant un remplacement, dans la liste correspondante, des nombres décomptés distants d'au plus un seuil de distance prédéterminé, par un nombre mis à jour égal à la valeur moyenne desdits nombres décomptés distants d'au plus le seuil de distance prédéterminé.

Par exemple, le seuil de distance prédéterminé est égal à 2.

Le résultat de l'étape 58, référencé 59, est illustré dans l'exemple de la figure 4. Dans cet exemple, dans la liste L1, les nombres 4 et 3 sont remplacés par 3,5 et dans la liste L2, les nombres 8 et 7 sont remplacés par 7,5.

Les nombres retenus à l'issue de l'étape 58 sont dit nombres mis à jour.

Comme on peut le constater à la lumière de l'exemple, les nombres mis à jour sont des nombres réels, alors que nombres décomptés initialement sont des nombres entiers.

Les nombres mis à jour sont représentatifs de valeurs adjacentes fusionnées.

Bien entendu, des variantes dans la réalisation des étapes décrites ci-dessus à la portée de l'homme du métier sont envisageables.

D'autres variantes de calcul sont envisageables, par exemple le calcul d'un nombre mis à jour en calculant la valeur moyenne des nombres distants d'au plus le seuil de distance prédéterminé.

Le procédé comprend ensuite une étape de détection 60 de présence du mot de synchronisation prédéterminé dans la série.

Dans un mode de réalisation, le mot de synchronisation est '1111', ce qui correspond au motif M₁.

Dans un mode de réalisation, l'étape 60 met en oeuvre le calcul du ratio de deux premiers nombres de la liste L1 (liste relatives aux nombres de '1' successifs décomptés).

Lorsque le ratio calculé est compris dans une plage de valeurs donnée, par exemple entre 1,7 et 2,3, il est considéré que la détection est positive.

En cas de détection positive à l'étape 60, le procédé comprend un calcul 62 des facteurs d'échantillonnage par multiplication de chaque nombre mis à jour par un coefficient d'incertitude prédéterminé.

Par exemple, le coefficient d'incertitude prédéterminé est K=1,3 ce qui correspond à une marge d'incertitude de 30%. D'autres valeurs de coefficient d'incertitude sont envisageables, par exemple entre 1,1 et 1,4 correspondant à une marge d'incertitude variant entre 10% et 40%.

Ainsi, on obtient le tableau 61 illustré à titre d'exemple dans la figure 4, qui contient le facteur d'échantillonnage F calculé associé à chaque motif considéré.

Bien entendu, d'autres structures de mémorisation peuvent être utilisées pour mémoriser les facteurs d'échantillonnage associés à chaque motif considéré.

Dans un mode de réalisation, les facteurs d'échantillonnage effectifs, appliqués pour la démodulation, sont des facteurs entiers obtenus à partir des facteurs d'échantillonnage calculés. Par exemple, chaque facteur entier est choisi comme étant le nombre entier le plus proche du facteur d'échantillonnage calculé. Les étapes respectives d'acquisition 42 d'image numérique, d'extraction 44 d'une série d'échantillons de l'image numérique acquise et de calcul 46 d'une pluralité de facteurs d'échantillonnage à partir de la série d'échantillons sont mises en oeuvre pour une pluralité de P images, P étant un nombre prédéterminé, supérieur ou égal à un, de préférence supérieur ou égal à deux, par exemple égal à 25. Les facteurs d'échantillonnage, pour chaque motif et pour chaque image numérique traitée, sont mémorisés.

Le procédé comporte, lorsque le nombre P est supérieur ou égal à deux, après que le nombre P d'images prédéterminé soit atteint (vérification 70), une étape 72 de calcul d'un facteur d'échantillonnage moyen par motif égal à la valeur moyenne des facteurs d'échantillonnage associés audit motif calculés pour chaque image numérique acquise.

Ensuite le procédé comporte une étape 74 d'application des facteurs d'échantillonnage pour la récupération d'au moins un paquet de données.

De préférence, les facteurs d'échantillonnage sont appliqués pour la récupération de paquets de données à partir d'une pluralité de P' images numériques acquises, P' étant un nombre prédéterminé, supérieur ou égal à 2, par exemple 10.

Ensuite, une validation des données récupérées est effectuée par application d'un code détecteur d'erreur et un pourcentage de démodulations validées est calculé.

Plus généralement, un indicateur de validité est calculé à partir de toutes les P' images traitées.

Cet indicateur de validité est comparé à un seuil de validité prédéterminé, par exemple égal à 80% lorsque l'indicateur est le pourcentage de démodulations validées.

Plus généralement, le seuil de validité est par exemple compris entre 60% et 100% lorsque l'indicateur est le pourcentage de démodulations validées.

Si le seuil de validité est atteint ou dépassé (test de l'étape 76), les facteurs d'échantillonnage moyen sont mémorisés à l'étape de mémorisation 78 pour l'appareil de capture d'images utilisé.

Par la suite, les facteurs d'échantillonnage mémorisés sont utilisés pour la démodulation et le décodage de données transmises.

Si le seuil de validité n'est pas atteint, les étapes 42 à 76 sont itérées sur des images numériques suivantes, sur lesquelles est appliqué par exemple un filtre de débruitage ou de correction.

Avantageusement, dans un mode de réalisation, les facteurs d'échantillonnage sont calculés sur une pluralité d'images numériques acquises, ce qui permet une bonne représentativité statistique du fonctionnement de l'appareil de capture d'images.

Avantageusement, le procédé fournit automatiquement une adaptation fine à toute éventuelle non linéarité spécifique de l'appareil de capture d'images utilisé. Cela permet une application avec tout appareil de capture d'images déjà installé dans un modèle d'appareils électroniques déjà commercialisés.

## Revendications

1. Procédé de calibration de la démodulation de données modulées par modulation d'amplitude d'un signal lumineux émis par une source lumineuse d'un dispositif codeur, les données modulées étant encapsulées dans des paquets de transmission formatés, le procédé étant mis en oeuvre par un dispositif de calibration de la démodulation comportant un appareil de capture d'images numériques ayant des paramètres de sensibilité et de durée d'exposition associés, et un dispositif électronique de calcul configuré pour recevoir des images numériques acquises par ledit appareil de capture, le procédé étant **caractérisé en ce qu'**il comporte des étapes de:
- A) ajustement automatique (40) des paramètres de sensibilité et de durée d'exposition pour une mise de l'appareil de capture d'images dans un mode d'acquisition d'images adapté pour un décodage de données transmises par communication par lumière visible,
- B) acquisition (42) d'une image numérique par ledit appareil de capture d'images numériques, une image numérique acquise comportant une zone comportant des franges claires et sombres, correspondant respectivement aux états haut et bas du signal lumineux reçu,
- C) extraction (44) d'une série d'échantillons de l'image numérique acquise, chaque échantillon extrait prenant une valeur parmi deux valeurs prédéterminées,
- D) calcul (46) d'une pluralité de facteurs d'échantillonnage à partir de ladite série d'échantillons, chaque facteur d'échantillonnage étant associé à un motif prédéterminé et étant indicatif d'un nombre d'échantillons de même valeur représentatifs dudit motif, et mémorisation, pour chaque motif prédéterminé, du facteur d'échantillonnage calculé associé audit motif.

2. Procédé selon la revendication 1, comportant en outre, une étape (74) d'application des facteurs d'échantillonnage calculés pour récupérer au moins un paquet de données transmises.

3. Procédé selon la revendication 2, comportant après récupération d'au moins un paquet de données transmises, une validation desdites données par application d'un code détecter d'erreur.

4. Procédé selon l'une quelconque des revendications 1 à 3 comportant l'application des étapes B) à D) sur un nombre prédéterminé P d'images numériques acquises, afin d'obtenir, une pluralité de facteurs d'échantillonnage par image numérique acquise, et un calcul (72) d'un facteur d'échantillonnage moyen par motif, égal à la valeur moyenne des facteurs d'échantillonnage associés audit motif pour chaque image numérique acquise.

5. Procédé selon la revendication 4, comportant en outre une application des facteurs d'échantillonnage moyens pour une récupération de données transmises, pour une pluralité d'images numériques, d'au moins un paquet de données transmises par image numérique, une validation des données récupérées par application d'un code détecteur d'erreur, et un calcul d'un indicateur de validité.

6. Procédé selon la revendication 5, dans lequel si l'indicateur de validité est inférieur (76) à un seuil de validité, les étapes B) à D) sont itérées sur ledit nombre prédéterminé d'images numériques acquises suivantes.

7. Procédé selon l'une quelconque des revendications 1 à 6, dans lequel l'étape D) de calcul d'une pluralité de facteurs d'échantillonnage à partir de ladite série d'échantillons comporte :
- pour chaque valeur d'échantillon, un décompte (54) des nombres d'échantillons successifs prenant ladite valeur, et un arrangement des nombres décomptés par ordre décroissant dans une liste associée à ladite valeur d'échantillon.

8. Procédé selon la revendication 7, comportant, pour chaque liste, un filtrage (56) pour retenir uniquement les nombres distincts ayant une occurrence supérieure ou égale à deux.

9. Procédé selon la revendication 8, comportant un regroupement (58) des nombres décomptés distants d'au plus le seuil de distance prédéterminé, le regroupement comportant un remplacement, dans la liste correspondante, desdits nombres décomptés distants d'au plus le seuil de distance prédéterminé par un nombre mis à jour égal à la valeur moyenne desdits nombres décomptés distants d'au plus le seuil de distance prédéterminé.

10. Procédé selon la revendication 9, comportant en outre une détection (60) de présence dans l'une desdites listes d'un nombre mis à jour correspondant à un mot de synchronisation prédéterminé.

11. Procédé selon la revendication 10, comportant, en cas de détection positive, un calcul (62) desdits facteurs d'échantillonnage par multiplication de chaque nombre mis à jour par un coefficient d'incertitude prédéterminé.

12. Procédé selon l'une quelconque des revendications précédentes, dans lequel la sensibilité est ajustée à 55% d'une sensibilité maximale de l'appareil de capture d'images.

13. Dispositif de calibration de la démodulation de données modulées par modulation d'amplitude d'un signal lumineux émis par une source lumineuse d'un dispositif codeur, les données modulées étant encapsulées dans des paquets de transmission formatés, comportant un appareil de capture d'images numériques ayant des paramètres de sensibilité et de durée d'exposition associés, et un dispositif électronique de calcul configuré pour recevoir des images numériques acquises par ledit appareil de capture, configuré pour mettre en oeuvre un procédé conforme aux revendications 1 à 12.

14. Dispositif de calibration de la démodulation selon la revendication 13, ledit dispositif étant un téléphone mobile ou une tablette électronique.
